# EUROPEAN PATENT APPLICATION

(11) **EP 2 560 424 A2**
(43) Date of publication of application: **20.02.2013**
(21) Application number: 12192461.7
(22) Date of filing: 05.10.2007
(51) Int. Cl.: H04W 8/06

(54) **Dynamic operator network selection using rate information**

(30) Priority: 10.10.2006 US 548162
(62) Divisional of application: 07843927.0
(71) Applicant: Apple Inc., Cupertino, CA 95014 (US)
(72) Inventor: Fadell, Tony, Portola Valley, CA California CA 94028 (US)
(74) Representative: Wardle, Callum Tarn

(57) **Abstract**

A mobile device, comprising:
a processor;
a wireless interface in data communication with the processor;
wherein the processor is configured to:
send a message to a network entity, where the message comprises at least identification information of the mobile device;
receive operator network preference information from the network entity, the operator network preference information based at least in part on the message;
select an operator network based at least in part on the operator network preference information; and
establish a communication session with the selected operator network.

## Description

### TECHNICAL FIELD

The invention relates to the field of telecommunications, and more particularly to dynamically selecting mobile carriers.

### BACKGROUND

A typical mobile phone or other cellular communication device is preprogrammed with a carrier or network operator that serves as the home network for the device. Normally, the device communicates over the home network when it is in an area served by the home network. When the device is outside of the home network area (or is roaming), the device typically uses a preferred roaming list to determine which network operator or carrier to use. In other words, the phone is programmed with a preferred roaming list, which is a list of identifiers for carriers that can be used, in order of preference, when the home carrier cannot be used.

In some cases, a service subscriber is served by a mobile virtual network operator (MVNO). An MVNO is a mobile operator that does not own communications spectrum and typically does not possess any network infrastructure. Instead, MVNO's contract with traditional mobile operators to buy service (e.g., usage minutes) for their own customers. An MVNO is typically tied to a specific carrier (e.g., Sprint or Verizon, which does own spectrum and has its own network infrastructure). Accordingly, primary service to an MVNO customer is provided through that specific carrier (i.e., the carrier is the "home" carrier).

### SUMMARY

This invention relates generally to the dynamic updating of carrier preference data for a mobile device. For example, carrier preference data can be updated in accordance with or to reflect bids from actual carriers as to the cost of network access (i.e., usage minutes).

According to one embodiment of the invention, access to a wireless cellular communication network can be provided by storing a network address on a mobile device. The network address can identify a mobile virtual network operator server storing mobile network operator data for use by the mobile device. A request for network operator data can be sent from the mobile device to the mobile virtual network operator server, and, in response to the request, network operator data can be received. A network operator for the mobile device can be selected based on the received network operator data, and communications can be conducted using the selected network operator.

Specific implementations of the invention can include one or more of the following features. The mobile device may not be associated with a particular home network operator. Bids can be received from multiple network operators for rates at which communication services using each network operator can be obtained. Preferences among the network operators can be determined using the received bids, and the preferences are used to select the network operator. Preferences may be further based on a location of the mobile device, the quality of service offered by the network operator, and/or type of communication. Bids from multiple network operators for rate information relating to rates at which communication services using each network operator can be obtained and the rate information can be sent to the mobile device for use in selecting the network operator. The rate information can be displayed on a user interface of the mobile device and a user selection of the network operator can be received from a user. The mobile device can be registered with a network operator for a limited purpose of sending the request and receiving the network operator data in response to the request, and the mobile device can be separately registered with the selected network operator for conducting communications after receiving the network operator data. Negotiations can be conducted with one or more network operators to provide access for the purpose of sending the request and the network operator data can be received in response to the request. The network operator data can be dynamically updated in the mobile virtual network operator server based on parameters associated with multiple network operators. The mobile device is preprogrammed with a carrier identifier associated with the mobile virtual network operator server.

According to another specific implementation, a message can be received from a mobile device identifying a current location of the mobile device. Network operator preference data can be sent to the mobile device, and the network operator preference data can identify a first set of preferences among multiple network operators for use by the mobile device in selecting one or more network operators. The network operator preference data can be updated to identify a second set of preferences among the multiple network operators, and the updated network operator preference data can be sent to the mobile device.

In addition, updating the network operator preference data can be performed dynamically based on parameters associated with the multiple network operators. The parameters include bids relating to rates at which communication services are available from each network operator, data relating to the network operators in an area corresponding to the current location of the mobile device, and/or rate information for different communication services available from each network operator. Bid information for each of multiple network operators can be received, and the bid information can relate to one or more rates at which communication services are available from each network operator. The network operator preference data can be updated using the bid information. The updated network operator preference data enables a user of the mobile device to select among multiple network operators. The updated network operator preference data can enable the mobile device to automatically select among multiple network operators.

A mobile virtual network operator server can operate to receive location data from mobile devices and, in response to the received location data, send network operator preference data to each mobile device. The network operator preference data can include data indicating preferences among multiple network operators and/or data for use in determining preferences among multiple network operators. An interface with each of multiple network operators can enable the mobile virtual network operator server to receive location data from each of the mobile devices and send network operator preference data to each of the mobile devices.

In addition, the mobile virtual network operator server can be a home location register. The mobile virtual network operator server may be operable to generate the network operator preference data based on parameters relating to the multiple network operators. The parameters can include pricing information for each of the network operators. The mobile virtual network operator server can operate to dynamically update the network operator preference data using the pricing information.

The details of one or more implementations are set forth in the accompanying drawings and the description below. Other features will be apparent from the description and drawings, and from the claims.

### DESCRIPTION OF DRAWINGS

FIG. 1 is a block diagram of a system for providing access to mobile or cellular communications services in accordance with an embodiment of the present invention.

FIG. 2 is a flow diagram of a process 200 for providing access to a wireless communication services in accordance with an embodiment of the present invention.

FIG. 3 is a flow diagram of a process 300 for receiving rate bids from network operators to dynamically update network operator preference data in accordance with an embodiment of the present invention.

FIG. 4 is a signaling and flow diagram of a process 400 for dynamically updating network operator selection information in accordance with an embodiment of the present invention.

### DETAILED DESCRIPTION

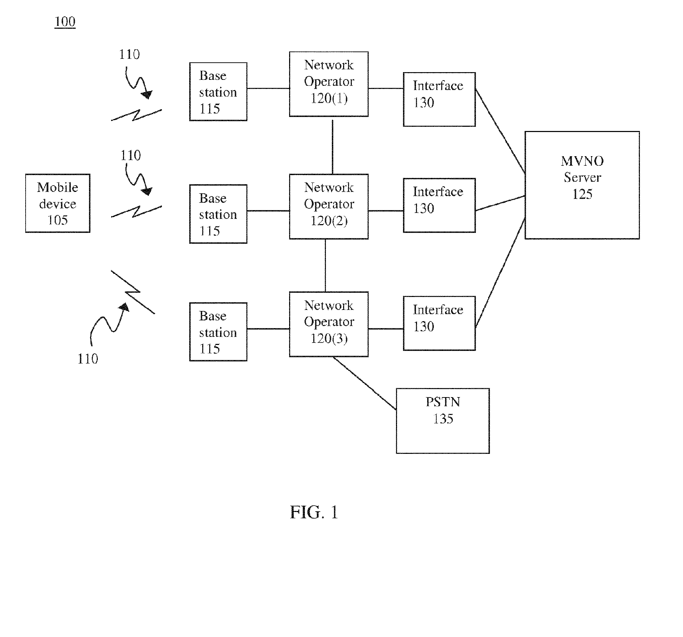

FIG. 1 is a block diagram of system 100 for providing access to mobile or cellular communications services. Mobile device 105 may be capable of establishing voice and/or data communications across wireless interface 110 with base station 115 in one or more operator networks 120(1), 120(2), and 120(3). For example, operator networks 120(1), 120(2), and 120(3) can be run by different operators and may use different parts of the available spectrum. In one scenario, mobile device 105 can communicate with a home network or, when in an area not served by the home network, with a visited network (i.e., in a roaming mode).

In one embodiment, mobile device 105 may not have an available home network. Instead, mobile device 105 can roam and use a carrier ID for a mobile virtual network operator (MVNO) associated with MVNO server 125. The carrier ID can typically bpreprogrammed into mobile device 105 and identifies the carrier (the MVNO, in this case) for mobile device 105 both to mobile device 105 and to operator networks 120(1), 120(2), and 120(3). To obtain wireless connectivity, mobile device 105 first may be authorized to communicate through at least one of operator networks 120(1), 120(2), or 120(3). Mobile device 105 can communicate with MVNO server 125 to receive authorization. For example, when mobile device 105 is powered up or enters a new area with wireless coverage, mobile device 105 registers with at least one of operator networks 120(1), 120(2), or 120(3). In some implementations, mobile device 105 may register with operator network 120(1), 120(2), or 120(3) for the limited purpose of communicating with the MVNO server 125 to obtain necessary authorizations and/or to receive data from MVNO server 125. The MVNO may negotiate and contract with operator network 120(1), 120(2), or 120(3) to provide such limited purpose communications, such that when operator network 120(1), 120(2), or 120(3) receives the initial registration signal, it can selectively allow communications between mobile device 105 and MVNO server 125 based upon recognition of the carrier ID included in the initial registration signal.

Mobile device 105 can send a message to MVNO server 125 through interface 130 between operator network 120(1), 120(2), or 120(3) and MVNO server 125. This message can serve to identify mobile device 105 as well as a current location (e.g., cellular service area) of the mobile device. In response, MVNO server 125 can provide operator network preference information to mobile device 105. In some cases, the information may be an update to information previously received by mobile device 105 or an indication that there is nothing to update. The operator preference information can be a preferred roaming list that indicates an order of preference for operator networks 120(1), 120(2), or 120(3) to be used by mobile device 105. The operator preference information may be based on the current location, current usage rate data, type of communication (e.g., data, voice, packet-switched, or circuit-switched), quality of service information, and/or user preference information stored in MVNO server 125. In some implementations, the operator preference information may provide data that enables the device itself or a user of the device to select the particular operator network 120(1), 120(2), or 120(3) instead of simply listing an order of preference for operator networks 120(1), 120(2), and 120(3). For example, MVNO server 125 may send rate information (e.g., cost per minute, cost per unit of data, etc.) and quality of service data that enables software on mobile device 105: (a) to determine which operator network 120(1), 120(2), or 120(3) to use in accordance with criteria stored locally on mobile device 105 or (b) to display a selection on a user interface to allow a user to make a manual selection.

After receiving the operator network preference information, mobile device 105 can establish communication sessions based on the operator network preference information. Subsequent communications need not be conducted through the particular operator network 120(1), 120(2), or 120(3) with which the mobile device initially registered. As a result, mobile device 105 may register with another operator network 120(1), 120(2), or 120(3) for purposes of conducting voice or data communications. The subsequent registration may result in an exchange of data between MVNO server 125 and selected operator network 120(1), 120(2), or 120(3) through corresponding interface 130. For example, such a data exchange may enable operator network 120(1), 120(2), or 120(3) to receive authentication information for mobile device 105 from MVNO server 125 and send billing or usage information to MVNO server 125. In addition, MVNO server 125 may serve as a home location register (HLR) for mobile device 105. Accordingly, MVNO server 125 may store and/or track additional information relating to mobile device 105 (e.g., user preferences, information about services that mobile device 105 subscribes to, and the like). Such information may be retrieved, as necessary, by operator network 120(1), 120(2), or 120(3) for use in providing communication services to mobile device 105.

The subsequent communications may be distinguished from the initial communications with MVNO server 125 using the initial registration because the initial communications involve transmission and exchange of network overhead data, while the subsequent communications may involve both network overhead data (e.g., registration signals, call setup information, handoff messages, location updates, and the like) and user data and signals (e.g., voice communications, user-initiated data requests and transfers, and responses to user data requests). The initial communications may select operator network 120(1), 120(2), or 120(3) at random or based on previously stored operator network preference information, while the subsequent communications select operator network 120(1), 120(2), or 120(3) based on the most up-to-the-minute operator network preference information.

As an example of a typical scenario, mobile device 105 may send an initial registration signal across wireless interface 110 to base station 115 associated with first operator network 120(1) for sending a location update message to MVNO server 125. In response to the location update message, MVNO server 125 may provide updated operator network preference information to mobile device 105. Based on this preference information, mobile device 105 may select a different operator network 120(3) for handling communications. Accordingly, mobile device 105 may send another registration signal to selected operator network 120(3) to obtain broader or further communication services. Once mobile device 105 is registered with selected operator network 120(3), mobile device 105 can conduct communications over wireless interface 110 with base stations 115 associated with selected operator network 120(3). These communications may include voice, data, or other communications with other subscribers, devices, or servers in selected operator network 120(3), other operator networks 120(1) and 120(2), public switched telephone network (PSTN) 135, or other external networks (not explicitly shown).

After registering with selected operator network 120(3), the mobile device can operate in a roaming mode. In the roaming mode, the location of mobile device 105 may be periodically updated in MVNO server 125 in case mobile device 105 travels between different service areas in operator network 120(3). Thus, MVNO server 125 can periodically or on an as-needed basis send messages to mobile device 105. In addition to location, other circumstances (e.g., available rates) may change. These changes may impact the operator network preference information. For example, the ordering of operator networks 120(1), 120(2), and 120(3) in the preference list may change or there may otherwise be a change in the data that was sent to mobile device 105 for use in selecting operator network 120(1), 120(2), or 120(3). In such a case, MVNO server 125 can dynamically update the operator network preference information by sending an update message to mobile device 105 through currently selected operator network 120(3).

Software residing on MVNO server 125 may include instructions for updating the network operator preference information based on information relating to various available operator networks 120(1), 120(2), and 120(3). For example, the software may simply update the network operator preference information and forward the updated information to mobile device 105 as such updated information is received. Alternatively, the software may use received information to calculate new usage rate information or to identify a operator network preferences based on other parameters, such as the location of mobile device 105 or the quality of service available from different operator networks 120(1), 120(2), and 120(3) at the current location. In some implementations, the network operator preference information may be dynamically updated based on bids relating to rates at which communication services are available from each operator network 120(1), 120(2), and 120(3). For example, network operators 120(1), 120(2), and 120(3) may continuously or periodically bid on usage rates that they each make available to mobile devices 105 associated with MVNO server 125. In addition, available rates may change as a result of a particular network operator offering only a limited number of minutes of usage at a particular rate or offering a particular rate for only a limited time. When this number of minutes have been used or the limited time has expired, MVNO server 125 may need to update the network operator preference information provided to mobile device 105.

In some cases, the updated operator network preference information may result in a selection of another available operator network 120(2) for use by mobile device 105. As a result, mobile device 105 may register with the new operator network 120(2) and cease communications with the previously selected operator network. In some implementations, the updated information may be received during an ongoing communication session (e.g., a voice call), in which case a handoff of mobile device 105 may be initiated by mobile device 105 or one of operator networks 120(2) or 120(3), assuming such an inter-network handoff is supported by operator networks 120(2) and 120(3). Thus, the operator network preferences may be dynamically updated (e.g., substantially in real time) as circumstances within overall system 100 change or evolve.

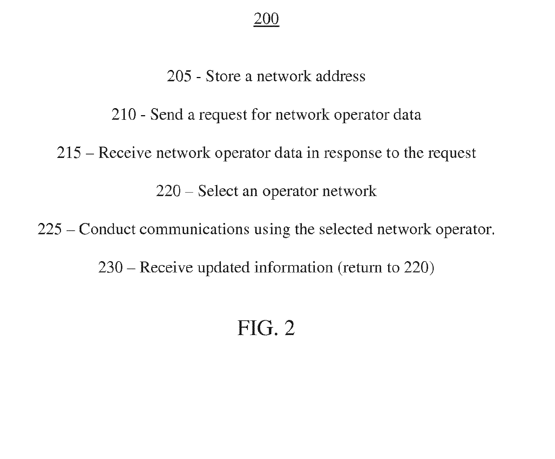

FIG. 2 is a flow diagram of process 200 for providing access to a wireless communication services. Process 200 involves storing (205) a network address for MVNO server 125 on mobile device 105. The network address may be in the form of an IP address, an address in an SS7 network, or simply a carrier ID. The network address can allow operator network 120(1), 120(2), or 120(3) to identify and contact MVNO server 125 associated with mobile device 105 and that maintains subscription, authentication, and preference data for mobile device 105. Using the network address, mobile device 105 can send (210) a request for network operator data and/or other information to MVNO server 125. In some cases, the request can be a specific request for updated operator network preference data for use in selecting among multiple available operator networks. In other cases, the request need not be a specific request but can be a location update or other type of message that serves as an implicit request for any information updates or other data.

In response to the request, network operator data, such as preferences among operator networks or data identifying usage rates available from the operator networks is received (215). For example, the network operator data can be sent from MVNO server 125 to mobile device 105. Alternatively, the network operator data can be received by MVNO server 125 from the operator networks themselves or from other third party data providers. Using the received network operator data, operator network 120(1), 120(2), or 120(3) can be selected (220) for use by mobile device 105 in conducting communications. In some implementations, the selection can be made by MVNO server 125 and communicated to mobile device 105. In other implementations, the selection of a particular operator network can be made by the mobile device based on information provided by MVNO server 125. Thereafter, communications involving mobile device 105 can be conducted (225) using the selected network operator.

In some cases, updated information can be subsequently received (230). The updated information may relate to the location of mobile device 105 or a change in rates or other circumstances within the available operator networks. In some cases, the updated information can be received by MVNO server 125, while in other cases the updated information can be received by mobile device 105. Based on the updated information, a selection of an operator network may be made (220). In some cases, the selection may be of the same operator network as previously selected. In other cases, the selection may be of a different operator network. In the latter case, communications involving mobile device 105 can be subsequently conducted (225) using the newly selected network operator.

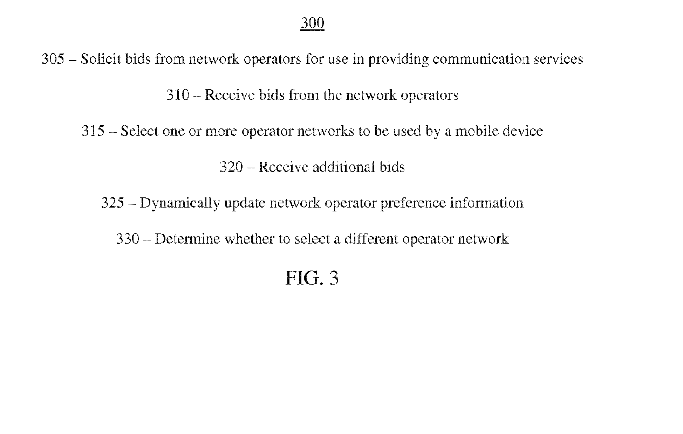

FIG. 3 is a flow diagram of process 300 for receiving rate bids from network operators to dynamically update network operator preference data. An MVNO or other entity can solicit (305) bids from a plurality of network operators for use in providing communication services to subscribers of the MVNO. In response, bids can be received (310) from the network operators. The bids can indicate rate information and potentially other restrictions or conditions for communication services provided through the respective operator networks. For example, a bid may indicate that a first network operator is willing to provide wireless voice communication services for a first specified per-minute rate. Another bid may indicate that a second network is willing to provide wireless voice communication services for a second specified per-minute rate and data communication services for a particular rate per megabyte of data transferred. Based on the bids and potentially on other information regarding the operator networks, one or more operator networks to be used by a mobile device served by the MVNO can be selected (315).

As additional bids are received over time (320), network operator preference information can be dynamically updated (325), and a determination can be made (330) as to whether to select a different operator network. The selection of operator networks can be made by either the mobile device itself using information provided by the MVNO server or by the MVNO server, where the selection is communicated to the mobile device. In some implementations, the selection of the operator network can be made by the user in response to viewing a display on the mobile device of the rate information and/or other data relating to the operator networks. In addition to the rate information, the selection may also be based on a current location of the mobile device, the quality of service offered by the various network operators, and/or the type of communication.

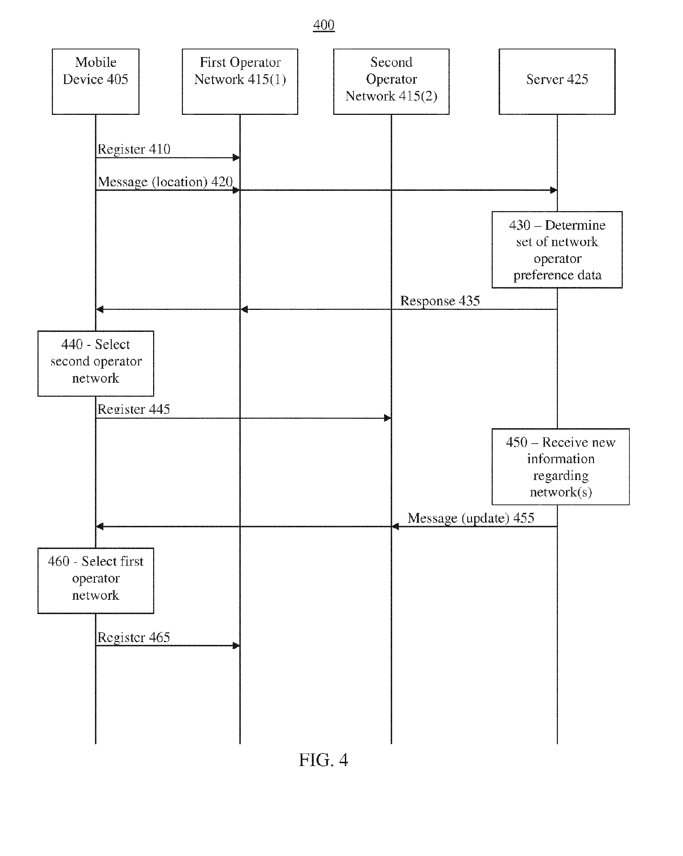

FIG. 4 is a signaling and flow diagram of process 400 for dynamically updating network operator selection information. Mobile device 405 can register (410) with first operator network 415(1). After registering, message 420 identifying a current location of mobile device 405 can be sent from mobile device 405, through first operator network 415(1) to server 425 associated with mobile device 405. Server 425 can determine (430) a set of network operator preference data for the current location of mobile device 405 and sends response 435 to mobile device 405, again through first operator network 415(1). Based on processing or reading of the information in the received response, mobile device 405 can select (440) second operator network 415(2) for conducting additional communications. Accordingly, mobile device 405 can register (445) with second operator network 415(2).

Subsequently, server 425 can receive (450) new information reflecting new circumstances in the overall environment. For example, the new information may relate to rates offered by one or more network operators, a location of the mobile device, or any other data that may have an impact on the selection of a network operator. Using the new information, the server can send message 455 to mobile device 405 to dynamically update the set of network operator preference data. Based on processing or reading of the information in message 455, mobile device 405 can select (460), in this example, first operator network 415(1) for conducting further communications. Accordingly, mobile device 405 can again register (465) with first operator network 415(1). As will be understood to persons of ordinary skill, process 400 may continue indefinitely, with the network operator preference data being repeatedly dynamically updated to result in selections among any number of available operator networks.

The described invention can be implemented in the context of a mobile device that is not associated with a particular home network (i.e., a device that continuously operates in roaming mode), or in the context of a mobile device that is associated with a home network. In the latter case, the techniques described herein can be used by the mobile device while roaming.

Using the techniques described herein, a mobile device is not limited to a particular operator network, but can constantly roam among different operator networks depending upon a current set of network operator preferences. Furthermore, the techniques allow an MVNO to provide the cheapest available rates, to provide the cheapest rates with an acceptable quality of service, and/or to allow users to tailor their selection of operator networks according to their own parameters. Moreover, the techniques allow network operators to establish better network utilization. For example, if a network operator has excess capacity, the network operator can offer low rates to an MVNO for a limited period of time to fill some of the excess capacity and provide an additional revenue stream. Similarly, if there are times of day when or locations where network utilization is low, the network operator can attempt to improve utilization by offering low rates to an MVNO. At the same time, the network operator has greater control over rates by being able to bid for providing service. As a result, the described techniques can be used to establish increased liquidity of network resources.

The invention and all of the functional operations described in this specification can be implemented in digital electronic circuitry, or in computer software, firmware, or hardware, including the structural means disclosed in this specification and structural equivalents thereof, or in combinations of them. The invention can be implemented as one or more computer program products, i.e., one or more computer programs tangibly embodied in an information carrier, e.g., in a machine readable storage device or in a propagated signal, for execution by, or to control the operation of, data processing apparatus, e.g., a programmable processor, a computer, or multiple computers. A computer program (also known as a program, software, software application, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the invention, can be performed by one or more programmable processors executing one or more computer programs to perform functions of the invention by operating on input data and generating output. The processes and logic flows can also be performed by, and apparatus of the invention can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, the processor will receive instructions and data from a read only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. Information carriers suitable for embodying computer program instructions and data include all forms of non volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made. For example, the described techniques may be implemented in systems with a different architecture than that shown and described. Furthermore, some operations performed in the described processes can be reordered, omitted, or supplemented with additional operations. Accordingly, other implementations are within the scope of the following claims.
Before going on to set out the claims, we shall first provide a set of clauses describing some salient features of some embodiments of the invention:
1. A method, comprising:
   at an accessible electronic device with a touch-sensitive surface and a display:
      displaying a plurality of user interface elements on the display, wherein a current focus is on a first user interface element;
      detecting a first finger gesture on the touch-sensitive surface, wherein the first finger gesture is independent of contacting a location on the touch-sensitive surface that corresponds to a second user interface element; and,
      in response to detecting the first finger gesture:
         changing the current focus from the first user interface element in the plurality of user interface elements to the second user interface element in the plurality of user interface elements; and
         outputting accessibility information associated with the second user interface element.
2. The method of clause 1, wherein the display is a touch screen display and the touch-sensitive surface is on the display.
3. The method of clause 1, wherein the first finger gesture does not contact the location on the touch-sensitive surface that corresponds to the second user interface element.
4. The method of clause 1, further comprising:
   detecting selection of an activation gesture; and
   in response to detecting selection of the activation gesture, executing an action associated with a user interface element that corresponds to the current focus.
5. The method of clause 1, wherein the accessibility information includes one or more words outputted as spoken text that corresponds to the second user interface element.
6. The method of clause 5, wherein the spoken text that corresponds to the second user interface element includes user options for the second user interface element.
7. The method of clause 1, wherein the accessibility information includes textual accessibility information.
8. The method of clause 1, wherein the accessibility information includes a border hit sound to indicate that the current focus has changed from the first user interface element to the second user interface element.
9. The method of clause 1, further comprising:
   detecting a second finger gesture on the touch-sensitive surface, wherein the second finger gesture is independent of contacting a location on the touch-sensitive surface that corresponds to a third user interface element, and wherein the second finger gesture is substantially similar to the first finger gesture;
   in response to detecting the second finger gesture:
      changing the current focus from the second user interface element in the plurality of user interface elements to the third user interface element in the plurality of user interface elements; and
      outputting accessibility information associated with the third user interface element.
10. The method of clause 9, wherein the accessibility information associated with the third user interface element includes a wrapping sound if the third user interface element is either above or below the second user interface element on the display.
11. The method of clause 10, further comprising scrolling the plurality of user interface elements, if the plurality of user interface elements is in a scrollable view.
12. The method of clause 9, further comprising:
   detecting a third finger gesture on the touch-sensitive surface, wherein the third finger gesture is independent of contacting the location on the touch-sensitive surface that corresponds to the second user interface element, and wherein the third finger gesture is substantially opposite to the first finger gesture;
   in response to detecting the third finger gesture:
      changing the current focus from the third user interface element in the plurality of user interface elements to the second user interface element in the plurality of user interface elements; and
      outputting accessibility information associated with the second user interface element.
13. The method of clause 1, further comprising:
   if the second user interface element is determined to be a first editable text field:
      setting a cursor at a first cursor location in the first editable text field; and
      outputting accessibility information associated with the first editable text field.
14. The method of clause 13, wherein the accessibility information associated with the first editable text field includes one or more words outputted as spoken text that corresponds to the first editable text field.
15. The method of clause 13, wherein the accessibility information associated with the first editable text field includes a text character outputted as spoken text that corresponds to a first character in the first editable text field.
16. The method of clause 13, further comprising:
   detecting a fourth finger gesture on the touch-sensitive surface in a direction substantially perpendicular to the first gesture;
   in response to detecting the fourth finger gesture:
      if the cursor is not at the end of the first editable text field:
         moving the cursor forward in the first editable text field to a second cursor location within the first editable text field; and
         outputting accessibility information associated with the second cursor location within the first editable text field; and,
      if the cursor is at the end of the first editable text field:
         maintaining the cursor at the end of the first editable text field; and
         outputting accessibility information indicating that the cursor is at the end of the first editable text field.
17. The method of clause 16, further comprising:
   detecting a fifth finger gesture on the touch-sensitive surface in a direction substantially opposite to the fourth gesture when the cursor is in the first editable text field;
   in response to detecting the fifth finger gesture:
      moving the cursor backward in the first editable text field to a third cursor location within the first editable text field; and
      outputting accessibility information associated with the third cursor location within the first editable text field.
18. An accessible electronic device, comprising:
   a touch-sensitive surface;
   a display;
   one or more processors;
   memory; and
   one or more programs, wherein the one or more programs are stored in the memory and configured to be executed by the one or more processors, the one or more programs including instructions for:
      displaying a plurality of user interface elements on the display, wherein a current focus is on a first user interface element;
      detecting a first finger gesture on the touch-sensitive surface, wherein the first finger gesture is independent of contacting a location on the touch-sensitive surface that corresponds to a second user interface element; and,
      in response to detecting the first finger gesture:
         changing the current focus from the first user interface element in the plurality of user interface elements to the second user interface element in the plurality of user interface elements; and
         outputting accessibility information associated with the second user interface element.
19. A computer readable storage medium having stored therein instructions, which when executed by an accessible electronic device with a touch-sensitive surface and a display, cause the device to:
   display a plurality of user interface elements on the display, wherein a current focus is on a first user interface element;
   detect a first finger gesture on the touch-sensitive surface, wherein the first finger gesture is independent of contacting a location on the touch-sensitive surface that corresponds to a second user interface element;
   in response to detecting the first finger gesture:
      change the current focus from the first user interface element in the plurality of user interface elements to the second user interface element in the plurality of user interface elements; and
      output accessibility information associated with the second user interface element.
20. A graphical user interface on an accessible electronic device with a touch-sensitive surface and a display, the graphical user interface comprising:
   a plurality of user interface elements on the display, wherein a current focus is on a first user interface element;
   wherein:
      in response to detecting a first finger gesture on the touch-sensitive surface, wherein the first finger gesture is independent of contacting a location on the touch-sensitive surface that corresponds to a second user interface element:
         the current focus is changed from the first user interface element in the plurality of user interface elements to the second user interface element in the plurality of user interface elements; and
         accessibility information associated with the second user interface element is outputted.
21. An accessible electronic device, comprising:
   a touch-sensitive surface;
   a display;
   means for displaying a plurality of user interface elements on the display, wherein a current focus is on a first user interface element;
   means for detecting a first finger gesture on the touch-sensitive surface, wherein the first finger gesture is independent of contacting a location on the touch-sensitive surface that corresponds to a second user interface element;
   in response to detecting the first finger gesture:
      means for changing the current focus from the first user interface element in the plurality of user interface elements to the second user interface element in the plurality of user interface elements; and
      means for outputting accessibility information associated with the second user interface element.
22. An accessibility method, comprising:
   at an electronic device with a touch-sensitive surface and a display:
      displaying a first section of a document on the display, wherein the document has a plurality of sections;
      outputting an audible document section indicia that corresponds to the first section of the document;
      detecting a first finger gesture on the touch-sensitive surface; and,
      in response to detecting the first finger gesture:
         ceasing to display the first section of the document;
         displaying a second section of the document on the display, wherein the second section of the document is adjacent to the first section of the document; and
         outputting an audible document section indicia that corresponds to the second section of the document.
23. The method of clause 22, wherein the display is a touch screen display and the touch-sensitive surface is on the display.
24. The method of clause 22, wherein the first finger gesture includes multiple concurrent finger contacts on the touch-sensitive surface.
25. The method of clause 22, wherein the audible document section indicia includes one or more words outputted as spoken text that provide navigation information about a currently displayed section of the document.
26. The method of clause 22, further comprising:
   detecting a second finger gesture on the touch-sensitive surface while displaying the second section of the document;
   in response to detecting the second finger gesture on the touch-sensitive surface:
      ceasing to display the second section of the document;
      displaying a third section of the document on the display, wherein the third section of the document is adjacent to the second section of the document; and
      outputting an audible document section indicia that corresponds to the third section of the document.
27. The method of clause 26, wherein the audible document section indicia that corresponds to the third section of the document includes one or more words outputted as spoken text that corresponds to the third section of the document.
28. The method of clause 26, further comprising:
   detecting a third finger gesture on the touch-sensitive surface while displaying the third section of the document, wherein the third finger gesture is in a direction substantially opposite the second finger gesture;
   in response to detecting the third finger gesture on the touch-sensitive surface:
      ceasing to display the third section of the document;
      redisplaying the second section of the document on the display; and
      outputting the audible document section indicia that corresponds to the second section of the document.
29. An accessible electronic device, comprising:
   a touch-sensitive surface;
   a display;
   one or more processors;
   memory; and
   one or more programs, wherein the one or more programs are stored in the memory and configured to be executed by the one or more processors, the one or more programs including instructions for:
      displaying a first section of a document on the display, wherein the document has a plurality of sections;
      outputting an audible document section indicia that corresponds to the first section of the document;
      detecting a first finger gesture on the touch-sensitive surface;
      in response to detecting the first finger gesture:
         ceasing to display the first section of the document;
         displaying a second section of the document on the display, wherein the second section of the document is adjacent to the first section of the document; and
         outputting an audible document section indicia that corresponds to the second section of the document.
30. A computer readable storage medium having stored therein instructions, which when executed by an accessible electronic device with a touch-sensitive surface and a display, cause the device to:
   display a first section of a document on the display, wherein the document has a plurality of sections;
   output an audible document section indicia that corresponds to the first section of the document;
   detect a first finger gesture on the touch-sensitive surface;
   in response to detecting the first finger gesture:
      cease to display the first section of the document;
      display a second section of the document on the display, wherein the second section of the document is adjacent to the first section of the document; and
      output an audible document section indicia that corresponds to the second section of the document.
31. A graphical user interface on an accessible electronic device with a touch-sensitive surface and a display, the graphical user interface comprising:
   a first section of a document, wherein the document has a plurality of sections ;
   wherein, in response to detecting a first finger gesture on the touch-sensitive surface:
      a second section of the document is displayed, replacing the displayed first section of the document, wherein the second section of the document is adjacent to the first section of the document; and
      an audible document section indicia that corresponds to the second section of the document is output.
32. An accessible electronic device , comprising:
   a touch-sensitive surface;
   a display;
   means for displaying a first section of a document on the display, wherein the document has a plurality of sections;
   means for outputting an audible document section indicia that corresponds to the first section of the document;
   means for detecting a first finger gesture on the touch-sensitive surface;
   in response to detecting the first finger gesture:
      means for ceasing to display the first section of the document;
      means for displaying a second section of the document on the display, wherein the second section of the document is adjacent to the first section of the document; and
      means for outputting an audible document section indicia that corresponds to the second section of the document.
33. A method, comprising:
   at an accessible electronic device with a touch-sensitive surface and a display:
      displaying a plurality of user interface elements on the display;
      detecting a first user interface navigation gesture by a finger on the touch-sensitive surface;
      in response to detecting the first user interface navigation gesture by the finger on the touch-sensitive surface, navigating in the plurality of user interface elements in accordance with a current navigable unit type, wherein the current navigable unit type is set to a first navigable unit type selected from a plurality of navigable unit types;
      detecting a first user interface navigation setting gesture on the touch-sensitive surface, wherein the first user interface navigation setting gesture is independent of contacting a location on the touch-sensitive surface that corresponds to any of the plurality of user interface elements;
      in response to detecting the first user interface navigation setting gesture on the touch-sensitive surface:
         changing the current navigable unit type from the first navigable unit type to a second navigable unit type selected from the plurality of navigable unit types; and
         outputting accessibility information about the second navigable unit type;
      after changing the current navigable unit type from the first navigable unit type to the second navigable unit type, detecting a second user interface navigation gesture by the finger on the touch-sensitive surface, wherein the second user interface navigation gesture is substantially the same as the first user interface navigation gesture; and,
      in response to detecting the second user interface navigation gesture by the finger on the touch-sensitive surface, navigating in the plurality of user interface elements in accordance with the current navigable unit type, wherein the current navigable unit type is set to the second navigable unit type.
34. The method of clause 33, wherein the first user interface navigation setting gesture has an associated direction, further comprising:
   detecting a second user interface navigation setting gesture on the touch-sensitive surface, wherein:
      the second user interface navigation setting gesture is independent of contacting a location on the touch-sensitive surface that corresponds to any of the plurality of user interface elements, and
      the second user interface navigation setting gesture has an associated direction that is substantially opposite the direction of the first user interface navigation setting gesture;
   in response to detecting the second user interface navigation setting gesture:
      changing the current navigable unit type from the second navigable unit type to the first navigable unit type; and
      outputting accessibility information about the first navigable unit type.
35. The method of clause 33, wherein the plurality of navigable unit types includes characters, words, sentences, lines, paragraphs, and/or pages.
36. The method of clause 35, wherein the accessibility information about the second navigable unit type is a spoken word selected from the group consisting of "characters," "words," "sentences," "lines," "paragraphs," and "pages."
37. The method of clause 33, wherein the display is a touch screen display and the touch-sensitive surface is on the display.
38. The method of clause 33, wherein the first user interface navigation setting gesture is a multi-finger gesture.
39. The method of clause 33, wherein the first user interface navigation setting gesture is a two-finger rotation gesture.
40. The method of clause 33, wherein the first user interface navigation setting gesture includes:
   a first finger contact and a concurrent second finger contact that are separated by a distance;
   the distance between the first finger contact and the second finger contact includes a center point; and,
   the first finger contact and the second finger contact rotate on the touch-sensitive surface around the center point.
41. The method of clause 33, wherein the current navigable unit type is context-dependent, and a current focus is on a user interface element in the plurality of user interface elements.
42. The method of clause 41, further comprising changing the current navigable unit type based on a type of the user interface element in the plurality of user interface elements that has the current focus.
43. An accessible electronic device, comprising:
   a touch-sensitive surface;
   a display;
   one or more processors;
   memory; and
   one or more programs, wherein the one or more programs are stored in the memory and configured to be executed by the one or more processors, the one or more programs including instructions for:
      displaying a plurality of user interface elements on the display;
      detecting a first user interface navigation gesture by a finger on the touch-sensitive surface;
      in response to detecting the first user interface navigation gesture by the finger on the touch-sensitive surface, navigating in the plurality of user interface elements on the display in accordance with a current navigable unit type, wherein the current navigable unit type is set to a first navigable unit type selected from a plurality of navigable unit types;
         detecting a first user interface navigation setting gesture on the touch-sensitive surface, wherein the first user interface navigation setting gesture is independent of contacting a location on the touch-sensitive surface that corresponds to any of the plurality of user interface elements;
         in response to detecting the first user interface navigation setting gesture on the touch-sensitive surface:
         changing the current navigable unit type from the first navigable unit type to a second navigable unit type selected from the plurality of navigable unit types; and
         outputting accessibility information about the second navigable unit type;
         after changing the current navigable unit type from the first navigable unit type to the second navigable unit type, detecting a second user interface navigation gesture by the finger on the touch-sensitive surface, wherein the second user interface navigation gesture is substantially the same as the first user interface navigation gesture; and,
      in response to detecting the second user interface navigation gesture by the finger on the touch-sensitive surface, navigating in the plurality of user interface elements on the display in accordance with the current navigable unit type, wherein the current navigable unit type is set to the second navigable unit type.
44. A computer readable storage medium having stored therein instructions, which when executed by an accessible electronic device with a touch-sensitive surface and a display, cause the device to:
   display a plurality of user interface elements on the display;
   detect a first user interface navigation gesture by a finger on the touch-sensitive surface;
   in response to detecting the first user interface navigation gesture by the finger on the touch-sensitive surface, navigate in the plurality of user interface elements in accordance with a current navigable unit type, wherein the current navigable unit type is set to a first navigable unit type selected from a plurality of navigable unit types;
   detect a first user interface navigation setting gesture on the touch-sensitive surface, wherein the first user interface navigation setting gesture is independent of contacting a location on the touch-sensitive surface that corresponds to any of the plurality of user interface elements;
   in response to detecting the first user interface navigation setting gesture on the touch-sensitive surface:
      change the current navigable unit type from the first navigable unit type to a second navigable unit type selected from the plurality of navigable unit types; and
      output accessibility information about the second navigable unit type;
   after changing the current navigable unit type from the first navigable unit type to the second navigable unit type, detect a second user interface navigation gesture by the finger on the touch-sensitive surface, wherein the second user interface navigation gesture is substantially the same as the first user interface navigation gesture; and,
   in response to detecting the second user interface navigation gesture by the finger on the touch-sensitive surface, navigate in the plurality of user interface elements in accordance with the current navigable unit type, wherein the current navigable unit type is set to the second navigable unit type.
45. A graphical user interface on an accessible electronic device with a touch-sensitive surface and a display, the graphical user interface comprising:
   a plurality of user interface elements on the display,
   wherein:
      in response to detecting a first user interface navigation gesture by a finger on the touch-sensitive surface, navigation in the plurality of user interface elements occurs in accordance with a current navigable unit type, wherein the current navigable unit type is set to a first navigable unit type selected from a plurality of navigable unit types;
      in response to detecting a first user interface navigation setting gesture on the touch-sensitive surface, wherein the first user interface navigation setting gesture is independent of contacting a location on the touch-sensitive surface that corresponds to any of the plurality of user interface elements:
         the current navigable unit type is changed from the first navigable unit type to a second navigable unit type selected from the plurality of navigable unit types; and
         accessibility information about the second navigable unit type is outputted;
      after changing the current navigable unit type from the first navigable unit type to the second navigable unit type, in response to detecting a second user interface navigation gesture by the finger on the touch-sensitive surface, wherein the second user interface navigation gesture is substantially the same as the first user interface navigation gesture, navigation in the plurality of user interface elements occurs in accordance with the current navigable unit type, wherein the current navigable unit type is set to the second navigable unit type.
46. An accessible electronic device, comprising:
   a touch-sensitive surface;
   a display;
   means for displaying a plurality of user interface elements on the display;
   means for detecting a first user interface navigation gesture by a finger on the touch-sensitive surface;
   in response to detecting the first user interface navigation gesture by the finger on the touch-sensitive surface, means for navigating in the plurality of user interface elements in accordance with a current navigable unit type, wherein the current navigable unit type is set to a first navigable unit type selected from a plurality of navigable unit types;
   means for detecting a first user interface navigation setting gesture on the touch-sensitive surface, wherein the first user interface navigation setting gesture is independent of contacting a location on the touch-sensitive surface that corresponds to any of the plurality of user interface elements;
   in response to detecting the first user interface navigation setting gesture on the touch-sensitive surface:
      means for changing the current navigable unit type from the first navigable unit type to a second navigable unit type selected from the plurality of navigable unit types; and
      means for outputting accessibility information about the second navigable unit type;
   after changing the current navigable unit type from the first navigable unit type to the second navigable unit type, means for detecting a second user interface navigation gesture by the finger on the touch-sensitive surface, wherein the second user interface navigation gesture is substantially the same as the first user interface navigation gesture; and
   in response to detecting the second user interface navigation gesture by the finger on the touch-sensitive surface, means for navigating in the plurality of user interface elements in accordance with the current navigable unit type, wherein the current navigable unit type is set to the second navigable unit type.
47. A method, comprising:
   at an accessible electronic device with a touch-sensitive surface and a display:
      mapping at least a first portion of the display to the touch-sensitive surface;
      concurrently displaying a plurality of user interface containers on the display;
      detecting a user interface container selection event that selects a first user interface container in the plurality of user interface containers; and,
      in response to detecting the user interface container selection event:
         ceasing to map the first portion of the display to the touch-sensitive surface,
   and
   proportionally mapping the first user interface container to be substantially coextensive with the touch-sensitive surface.
48. The method of clause 47, further comprising outputting accessibility information associated with the first user interface container in response to detecting the user interface container selection event.
49. The method of clause 47, further comprising visually highlighting the first user interface container in response to detecting the user interface container selection event.
50. The method of clause 47, further comprising:
   detecting a user interface container navigation event that deselects the first user interface container;
   in response to detecting the user interface container navigation event:
      ceasing to proportionally map the first user interface container to be substantially coextensive with the touch-sensitive surface, and
      remapping the first portion of the display to the touch-sensitive surface.
51. The method of clause 47, wherein the first user interface container includes a plurality of user interface elements.
52. The method of clause 51, further comprising:
   while the first user interface container is proportionally mapped to be substantially coextensive with the touch-sensitive surface, detecting a first user interface element navigation gesture on the touch-sensitive surface, wherein the first user interface element navigation gesture contacts an area of the touch-sensitive surface to which at least one user interface element of the plurality of user interface elements is mapped;
   in response to detecting the first user interface element navigation gesture, outputting accessibility information associated with the at least one user interface element of the plurality of user interface elements.
53. The method of clause 51, wherein multiple user interface elements in the plurality of user interface elements are substantially aligned in one direction within the first user interface container.
54. The method of clause 53, further comprising:
   while the first user interface container is proportionally mapped to be substantially coextensive with the touch-sensitive surface, detecting a second user interface element navigation gesture on the touch-sensitive surface, wherein detecting the second user interface element navigation gesture includes:
      detecting a finger contact, and
      detecting movement of the finger contact in substantially one direction;
   in response to detecting the movement of the finger contact in substantially one direction, moving a current focus in the first user interface container in accordance with the movement of the finger contact, wherein locations for the current focus are substantially confined within a first axis aligned with the multiple user interface elements.
55. The method of clause 54, further comprising:
   detecting movement of the finger contact that substantially departs from the one direction; and
   in response to detecting movement of the finger contact that substantially departs from the one direction, moving the current focus away from a user interface element within the first aligned axis to a user interface element in the first user interface container other than one of the multiple user interface elements that are along the first aligned axis.
56. The method of clause 47, wherein the plurality of user interface containers comprises a hierarchy of user interface containers.
57. The method of clause 56, further comprising:
   while the first user interface container is proportionally mapped to be substantially coextensive with the touch-sensitive surface, detecting another user interface container selection event that selects a second user interface container in the plurality of user interface containers; and,
   in response to detecting the another user interface container selection event:
      ceasing to proportionally map the first user interface container to be substantially coextensive with the touch-sensitive surface, and
      proportionally mapping the second user interface container to be substantially coextensive with the touch-sensitive surface,
   wherein the second user interface container is in a level of the hierarchy of user interface containers that is immediately below the first user interface container.
58. The method of clause 56, further comprising traversing down the hierarchy of user interface containers in response to detecting the user interface container selection event.
59. The method of clause 58, wherein the user interface container selection event is a multi-finger gesture.
60. The method of clause 58, wherein the user interface container selection event is a multi-finger depinching gesture.
61. The method of clause 58, wherein the user interface container selection event is a multi-finger swipe gesture.
62. The method of clause 56, further comprising traversing up the hierarchy of user interface containers in response to detecting a user interface container deselection event.
63. The method of clause 61, wherein the user interface container deselection event is a multi-finger gesture.
64. The method of clause 61, wherein the user interface container selection event is a multi-finger pinching gesture.
65. The method of clause 61, wherein the user interface container selection event is a multi-finger swipe gesture.
66. An accessible electronic device, comprising:
   a touch-sensitive surface;
   a display;
   one or more processors;
   memory; and
   one or more programs, wherein the one or more programs are stored in the memory and
   configured to be executed by the one or more processors, the one or more programs including instructions for:
      mapping at least a first portion of the display to the touch-sensitive surface;
      concurrently displaying a plurality of user interface containers on the display;
      detecting a user interface container selection event that selects a first user interface container in the plurality of user interface containers; and,
      in response to detecting the user interface container selection event:
         ceasing to map the first portion of the display to the touch-sensitive surface,
            and
         proportionally mapping the first user interface container to be substantially coextensive with the touch-sensitive surface.
67. A computer readable storage medium having stored therein instructions, which when executed by an accessible electronic device with a touch-sensitive surface and a display, cause the device to:
   map at least a first portion of the display to the touch-sensitive surface;
   concurrently display a plurality of user interface containers on the display;
   detect a user interface container selection event that selects a first user interface container in the plurality of user interface containers; and,
   in response to detecting the user interface container selection event:
      cease to map the first portion of the display to the touch-sensitive surface, and
      proportionally map the first user interface container to be substantially coextensive with the touch-sensitive surface.
68. A graphical user interface on an accessible electronic device with a touch-sensitive surface and a display, the graphical user interface comprising:
   a plurality of user interface containers on the display,
   wherein:
      at least a first portion of the display is mapped to the touch-sensitive surface; and,
      in response to detecting a user interface container selection event that selects a first user interface container in the plurality of user interface containers:
         the first portion of the display ceases to be mapped to the touch-sensitive surface, and
         the first user interface container is proportionally mapped to be substantially coextensive with the touch-sensitive surface.
69. An accessible electronic device, comprising:
   a touch-sensitive surface;
   a display;
   means for mapping at least a first portion of the display to the touch-sensitive surface;
   means for concurrently displaying a plurality of user interface containers on the display;
   means for detecting a user interface container selection event that selects a first user interface container in the plurality of user interface containers; and,
   in response to detecting the user interface container selection event:
      means for ceasing to map the first portion of the display to the touch-sensitive surface, and
      means for proportionally mapping the first user interface container to be substantially coextensive with the touch-sensitive surface.
70. An accessibility method, comprising:
   at an electronic device with a touch screen display, the touch screen display having a center:
      displaying content in a user interface at a first magnification on the touch screen display;
      detecting a first multi-finger gesture on the touch screen display, wherein detecting the first multi-finger gesture includes detecting concurrent multi-finger contacts on the touch screen display;
      determining a bounding box for the concurrent multi-finger contacts; and,
      in response to detecting the first multi-finger gesture on the touch screen display, magnifying the content in the user interface about a point in the bounding box to a second magnification, greater than the first magnification, on the touch screen display, wherein:
         the point in the bounding box is at a default position within the bounding box when the bounding box is located at the center of the touch screen display, and,
         when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
71. The method of clause 70, wherein the first magnification corresponds to a default unmagnified view.
72. The method of clause 70, wherein the point in the bounding box is displaced from a centroid of the bounding box towards a respective edge of the bounding box by an amount that increases as a distance that the bounding box is displaced from the center of the touch screen display towards a corresponding edge of the touch screen display increases.
73. The method of clause 70, wherein the first multi-finger gesture is a three-finger gesture.
74. The method of clause 70, wherein the first multi-finger gesture is a three-finger, double-tap gesture.
75. The method of clause 70, wherein the bounding box is a rectangular bounding box.
76. The method of clause 70, wherein magnifying the content in the user interface about the point in the bounding box includes displaying a zooming-in animation about the point in the bounding box.
77. The method of clause 70, wherein the point in the bounding box is displaced from the default position in the bounding box towards the respective edge of the bounding box by an amount that is proportional to the distance that the bounding box is displaced from the center of the touch screen display towards the corresponding edge of the touch screen display.
78. The method of clause 70, wherein the point in the bounding box is displaced from the default position in the bounding box to the respective edge of the bounding box when the respective edge of the bounding box is located at a corresponding edge of the touch screen display.
79. The method of clause 70, including;
   while displaying the content in the user interface at the second magnification on the touch screen display:
   detecting a second multi-finger gesture on the touch screen display; and,
   in response to detecting the second multi-finger gesture on the touch screen display, demagnifying the content in the user interface to the first magnification.
80. The method of clause 79, wherein the second multi-finger gesture is a three-finger gesture.
81. The method of clause 79, wherein the second multi-finger gesture is a three-finger, double-tap gesture.
82. The method of clause 79, wherein the second multi-finger gesture is substantially the same as the first multi-finger gesture.
83. The method of clause 79, wherein demagnifying the content in the user interface includes displaying a zooming-out animation.
84. A graphical user interface on an accessible electronic device with a touch screen display having a center, the graphical user interface comprising:
   content displayed at a first magnification on the touch screen display;
   wherein:
      a first multi-finger gesture is detected on the touch screen display;
      detecting the first multi-finger gesture includes detecting concurrent multi-finger contacts on the touch screen display;
      a bounding box for the concurrent multi-finger contacts is determined; and,
      in response to detecting the first multi-finger gesture on the touch screen display, the content in the user interface is magnified about a point in the bounding box to a second magnification, greater than the first magnification, on the touch screen display, wherein:
         the point in the bounding box is at a default position within the bounding box when the bounding box is located at the center of the touch screen display, and,
         when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
85. An accessible electronic device, comprising:
   a touch screen display having a center;
   one or more processors;
   memory; and
   one or more programs, wherein the one or more programs are stored in the memory and
   configured to be executed by the one or more processors, the one or more programs including instructions for:
      displaying content in a user interface at a first magnification on the touch screen display;
      detecting a first multi-finger gesture on the touch screen display, wherein detecting the first multi-finger gesture includes detecting concurrent multi-finger contacts on the touch screen display;
      determining a bounding box for the concurrent multi-finger contacts; and,
      in response to detecting the first multi-finger gesture on the touch screen display, magnifying the content in the user interface about a point in the bounding box to a second magnification, greater than the first magnification, on the touch screen display, wherein:
         the point in the bounding box is at a default position within the bounding box when the bounding box is located at the center of the touch screen display, and,
         when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
86. A computer readable storage medium storing one or more programs, the one or more programs comprising instructions, which when executed by an accessible electronic device with a touch screen display having a center, cause the device to:
   display content in a user interface at a first magnification on the touch screen display;
   detect a first multi-finger gesture on the touch screen display, wherein detecting the first multi-finger gesture includes detecting concurrent multi-finger contacts on the touch screen display;
   determine a bounding box for the concurrent multi-finger contacts; and,
   in response to detecting the first multi-finger gesture on the touch screen display, magnify the content in the user interface about a point in the bounding box to a second magnification, greater than the first magnification, on the touch screen display, wherein:
      the point in the bounding box is at a default position within the bounding box when the bounding box is located at the center of the touch screen display, and,
      when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
87. An accessible electronic device, comprising:
   a touch screen display having a center;
   means for displaying content in a user interface at a first magnification on the touch screen display;
   means for detecting a first multi-finger gesture on the touch screen display, wherein detecting the first multi-finger gesture includes detecting concurrent multi-finger contacts on the touch screen display;
   means for determining a bounding box for the concurrent multi-finger contacts; and,
   in response to detecting the first multi-finger gesture on the touch screen display, means for magnifying the content in the user interface about a point in the bounding box to a second magnification, greater than the first magnification, on the touch screen display, wherein:
      the point in the bounding box is at a default position within the bounding box when the bounding box is located at the center of the touch screen display, and,
      when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
88. An information processing apparatus for use in an accessible electronic device with a touch screen display having a center, comprising:
   means for displaying content in a user interface at a first magnification on the touch screen display;
   means for detecting a first multi-finger gesture on the touch screen display, wherein detecting the first multi-finger gesture includes detecting concurrent multi-finger contacts on the touch screen display;
   means for determining a bounding box for the concurrent multi-finger contacts; and,
   in response to detecting the first multi-finger gesture on the touch screen display, means for magnifying the content in the user interface about a point in the bounding box to a second magnification, greater than the first magnification, on the touch screen display, wherein:
      the point in the bounding box is at a default position within the bounding box when the bounding box is located at the center of the touch screen display, and,
      when the bounding box is located away from the center of the touch screen display, the point in the bounding box is displaced from the default position within the bounding box towards a respective edge of the bounding box by an amount that corresponds to a displacement of the bounding box from the center of the touch screen display towards a corresponding edge of the touch screen display.
89. An accessibility method, comprising:
   at an electronic device with a touch screen display:
      displaying content in a user interface on the touch screen display;
      detecting a plurality of concurrent finger contacts on the touch screen display;
      detecting movement of the plurality of concurrent finger contacts on the touch screen display;
      scrolling the content in the user interface in accordance with the movement of the plurality of concurrent finger contacts;
      detecting lift off of all but one of the plurality of concurrent finger contacts while continuing to detect a single remaining finger contact;
      ceasing scrolling of the content in the user interface when the single remaining finger contact is located in a predefined central portion of the touch screen display; and
      scrolling the content in the user interface when the single remaining finger contact is located in a predefined border portion of the touch screen display.
90. The method of clause 89, wherein displaying the content in the user interface on the touch screen display comprises displaying a magnified view of the content in the user interface.
91. The method of clause 89, wherein the plurality of concurrent finger contacts are three concurrent finger contacts.
92. The method of clause 89, including:
   before detecting lift off of all but one of the plurality of concurrent finger contacts:
   detecting lift off of some of the plurality of concurrent finger contacts while continuing to detect at least two remaining finger contacts;
   detecting movement of the at least two remaining finger contacts on the touch screen display; and
   scrolling the content in the user interface in accordance with the movement of the at least two remaining finger contacts.
93. The method of clause 89, wherein scrolling the content in the user interface when the single remaining finger contact is located in the predefined border portion of the touch screen display includes:
   scrolling the content in the user interface away from an edge of the touch screen display that is nearest to the single remaining finger contact.
94. The method of clause 93, wherein the scrolling of the content in the user interface away from the edge of the touch screen display that is nearest to the single remaining finger contact has a scrolling speed that inversely corresponds to a distance between the single remaining finger contact and the edge of the touch screen display that is nearest to the single remaining finger contact.
95. The method of clause 89, including:
   after detecting lift off of all but one of the plurality of concurrent finger contacts:
      detecting lift off of the single remaining finger contact in the predefined border portion of the touch screen display; and,
      in response to detecting lift off of the single remaining finger contact in the predefined border portion of the touch screen display, ceasing to scroll the content in the user interface.
96. A graphical user interface on an accessible electronic device with a touch screen display, the graphical user interface comprising:
   content displayed on the touch screen display;
   wherein:
      a plurality of concurrent finger contacts is detected on the touch screen display;
      movement of the plurality of concurrent finger contacts on the touch screen display is detected;
      the content in the user interface is scrolled in accordance with the movement of the plurality of concurrent finger contacts;
      lift off of all but one of the plurality of concurrent finger contacts is detected while continuing to detect a single remaining finger contact;
      scrolling of the content in the user interface is ceased when the single remaining finger contact is located in a predefined central portion of the touch screen display; and
      the content in the user interface is scrolled when the single remaining finger contact is located in a predefined border portion of the touch screen display.
97. An accessible electronic device, comprising:
   a touch screen display;
   one or more processors;
   memory; and
   one or more programs, wherein the one or more programs are stored in the memory and
   configured to be executed by the one or more processors, the one or more programs including instructions for:
      displaying content in a user interface on the touch screen display;
      detecting a plurality of concurrent finger contacts on the touch screen display;
      detecting movement of the plurality of concurrent finger contacts on the touch screen display;
      scrolling the content in the user interface in accordance with the movement of the plurality of concurrent finger contacts;
      detecting lift off of all but one of the plurality of concurrent finger contacts while continuing to detect a single remaining finger contact;
      ceasing scrolling of the content in the user interface when the single remaining finger contact is located in a predefined central portion of the touch screen display; and
      scrolling the content in the user interface when the single remaining finger contact is located in a predefined border portion of the touch screen display.
98. A computer readable storage medium storing one or more programs, the one or more programs comprising instructions, which when executed by an accessible electronic device with a touch screen display, cause the device to:
   display content in a user interface on the touch screen display;
   detect a plurality of concurrent finger contacts on the touch screen display;
   detect movement of the plurality of concurrent finger contacts on the touch screen display;
   scroll the content in the user interface in accordance with the movement of the plurality of concurrent finger contacts;
   detect lift off of all but one of the plurality of concurrent finger contacts while continuing to detect a single remaining finger contact;
   cease scrolling of the content in the user interface when the single remaining finger contact is located in a predefined central portion of the touch screen display; and
   scroll the content in the user interface when the single remaining finger contact is located in a predefined border portion of the touch screen display.
99. An accessible electronic device, comprising:
   a touch screen display;
   means for displaying content in a user interface on the touch screen display;
   means for detecting a plurality of concurrent finger contacts on the touch screen display;
   means for detecting movement of the plurality of concurrent finger contacts on the touch screen display;
   means for scrolling the content in the user interface in accordance with the movement of the plurality of concurrent finger contacts;
   means for detecting lift off of all but one of the plurality of concurrent finger contacts while continuing to detect a single remaining finger contact;
   means for ceasing scrolling of the content in the user interface when the single remaining finger contact is located in a predefined central portion of the touch screen display; and
   means for scrolling the content in the user interface when the single remaining finger contact is located in a predefined border portion of the touch screen display.
100. An information processing apparatus for use in an accessible electronic device with a touch screen display, comprising:
   means for displaying content in a user interface on the touch screen display;
   detecting a plurality of concurrent finger contacts on the touch screen display;
   means for detecting movement of the plurality of concurrent finger contacts on the touch screen display;
   means for scrolling the content in the user interface in accordance with the movement of the plurality of concurrent finger contacts;
   means for detecting lift off of all but one of the plurality of concurrent finger contacts while continuing to detect a single remaining finger contact;
   means for ceasing scrolling of the content in the user interface when the single remaining finger contact is located in a predefined central portion of the touch screen display; and
   means for scrolling the content in the user interface when the single remaining finger contact is located in a predefined border portion of the touch screen display.

## Claims

1. A mobile device, comprising:
a processor;
a wireless interface in data communication with the processor;
wherein the processor is configured to:
send a message to a network entity, where the message comprises at least identification information of the mobile device;
receive operator network preference information from the network entity, the operator network preference information based at least in part on the message;
select an operator network based at least in part on the operator network preference information; and
establish a communication session with the selected operator network.

2. The mobile device of Claim 1, wherein the message further comprises geographical location information of the mobile device.

3. The mobile device of Claim 1, the processor further configured to:
receive new operator network preference information from the network entity;
determine when to select a new operator network based at least in part on the new operator network preference information; and
select the operator network based at least in part on the determination.

4. The mobile device of Claim 1, wherein the network preference information comprises at least a list of available network operators and associated rate information relating to rates at which communications services can be obtained by a respective network operator.

5. The mobile device of Claim 1, wherein the processor is configured to select an operator based is further configured to:
display a list of available network operators to a user of the mobile device, the list obtained from the operation network preference information; and
prompt the user to select a network operator.

6. A method for providing access to a wireless cellular communication network, the method comprising:
receiving at a network entity a message from a mobile device, where the message comprises at least identification information of the mobile device; and
generating network preference information based at least in part on the received message; and
sending the network preference information to the mobile device;
wherein the network preference information is configured to enable the mobile device to select a desired network operator.

7. The method of Claim 6, further comprising:
receiving one or more bids for communications services from one or more network operators, the one or more bids comprising at least rate information relating to rates at which services can be obtained from the respective one or more network operators;
wherein the act of generating network information is further based at least in part on the received one or more bids.

8. The method of Claim 7, wherein the one or more bids is based at least in part on the message from the mobile device.

9. The method of Claim 6, wherein the act of generating the network preference information is based at least in part on the identification information.

10. A system comprising:
means for receiving a message from a mobile device, where the message comprises at least identification information of the mobile device; and
means for generating network preference information based at least in part on the received message; and
means for sending the network preference information to the mobile device;
wherein the network preference information is configured to enable the mobile device to select a desired network operator.

11. The system of claim 10, further comprising means for sending network operator preference data to the mobile device, wherein the network operator preference data identifies a first set of preferences among a plurality of network operators for use by the mobile device in selecting one or more network operators;

12. The system of Claim 11, further comprising:
means for updating the network operator preference data to identify a second set of preferences among the plurality of network operators; and
means for sending the updated network operator preference data to the mobile device.

13. The system of Claim 12, further comprising means for determining a change in the current location of the mobile device;
wherein the means for updating the network operator preference data is triggered based at least in part on the determined change.

14. The system of Claim 11, further comprising means for dynamically updating the network operator preference data based on bids relating to rates at which communication services are available from each network operator.

15. The system of Claim 11, wherein the network operator preference data is based at least in part on the message.
